# EUROPEAN PATENT APPLICATION

(11) **EP 2 541 836 A1**
(43) Date of publication of application: **02.01.2013**
(21) Application number: 11447015.6
(22) Date of filing: 29.06.2011
(51) Int. Cl.: H04L 12/24, H04L 12/26, G06F 9/445, H04L 29/12, H04L 29/08, H04L 29/06

(54) **Remote management of devices and device implementing the method**

(71) Applicant: Thomson Telecom Belgium, 2650 Edegem (BE)
(72) Inventor: Van de Poel, Dirk, 2650 Edegem (BE)
(74) Representative: Ruellan-Lemonnier, Brigitte

(57) **Abstract**

The invention relates to the field of remote management of devices, and devices for implementing the method. In particular the invention relates to a life-line for remote manageable of customer premises equipment (CPE) that can be used to re-establish a communication that has been lost between a remote server and a CPE.

## Description

### 1. Field of invention.

The invention relates to the field of remote management of devices, and devices for implementing the method. In particular the invention relates to a life-line for remote manageable of customer premises equipment (CPE) that can be used when communication has been lost between a remote server and a CPE.

### 2. Technical background.

With the emergence of service subscriber devices in the home, for example so-called triple-play gateways (VoIP telephony (Voice over Internet Protocol), Internet, IP television), the problem arises for service operators of how to manage these service subscriber devices, so as to configure them correctly to be able to use/receive services proposed by these service operators in a satisfactory way. Notably, service operators may frequently need to install additional software, upgrade firmware, or configure existing soft- or hardware in a home gateway that is provided by the operator to provide new services, or to improve existing services.

Solutions comprise connecting these service subscriber devices to a dedicated configuration device or ACS (Auto Configuration Server), for example according to the TR-069 specification for remote configuration of CPE or service subscriber devices, the ACS being in charge of automatically distributing required software to the service subscriber devices.

However, existing solutions fail when communication between the ACS and the CPE devices is definitely lost, e.g. in case of TR-069, the device is responsible for establishing management connections to the server (ACS). Once the CPE has lost the correct location (address) of the server or has lost valid authentication information the CPE is considered "lost" for the ACS because the CPE is unable to successfully establish a management connection to the server. Such a situation can occur when a subscriber disconnected his CPE device from the operator network for a relatively long time; for example due to a prolonged absence during which the operator changed server addresses. Other examples include misconfiguration of the CPE device due to an error in a software or configuration update or misconfiguration of the CPE device by the user. In such a case, the communication between the service operator and the subscriber device is definitely lost and can only be restored by manual intervention of the operator, either by instructing the user or by sending of a engineer to the user's premises.

There is thus a need for optimization of the remote configuration management of an operator's service subscriber devices that are deployed in the homes of his customers.

### 3. Summary of the invention.

The present invention aims at alleviating at least some of the inconveniences of prior art.

More precisely, the invention allows optimized remote management of a service operator's service subscription devices or CPE.

To this effect, the invention proposes a method of communication between a remote configuration device and a remote configurable device connected in a digital communication network, the method being implemented by the remote configuration device and comprising the following steps:
if it is determined that the remote management connection is lost,
   - transmission of a message comprising at least one command comprising configuration update and/or software update to an address and a lifeline port number of a remote configurable device, the lifeline port number being a port number on which the remote configurable device listens for the message; and
   - reception of a request for establishment of the remote management connection between the configuration device and the remote configurable device.

According to a variant embodiment, reestablishment of the remote management connection is initiated upon a reception of a confirmation message from the remote configurable device, representative for an indication that the message has been taken into account by the remote configurable device.

According to a variant embodiment, the message comprises information representative of connection request credentials.

The invention also proposes a method of communication between a remote configurable device and a configuration device connected in a digital communication network, the method being implemented by the remote configurable device, the method comprising the steps of: listening for an incoming message on a lifeline port number, the lifeline port number being a port number on which the remote configurable device listens for incoming messages that comprise a configuration update and/or a software update for the remote configurable device; applying the configuration update and/or the software update; and transmission of a request for establishment of a remote management connection to the remote configuration device.

The invention also comprises a remote configurable device, the remote configurable device being connected in a digital communication network, the remote configurable device comprising : a connection request server for listening to incoming messages on a lifeline port number, the lifeline port number being a port number on which the remote configurable device listens for incoming messages that comprise a connection request, a configuration and/or software update for the remote configurable device; and a remote management client, for reception of messages related to remote configuration of the remote configurable device by the remote configuration management device.

The invention also comprises a remote configuration management device, the remote configuration management device comprising: a connection request client for sending of a message comprising at least one command comprising configuration update and/or software update to an address and a lifeline port number of a remote configurable device, the lifeline port number being a port number on which the remote configurable device listens for the message; and a remote management server, for transmission of messages related to remote configuration of the remote configurable device by the remote configuration management device.

### 4. List of figures.

More advantages of the invention will appear through the description of particular, non-restricting embodiments of the invention. The embodiments will be described with reference to the following figures:
Figure 1 shows an example network infrastructure in which the invention is implemented;
Figure 2 shows shows additional modules 201, 202, 204, 205 and 207, that are added to devices 104 and 106 of figure 1 that implement the invention.

### 5. Detailed description of the invention.

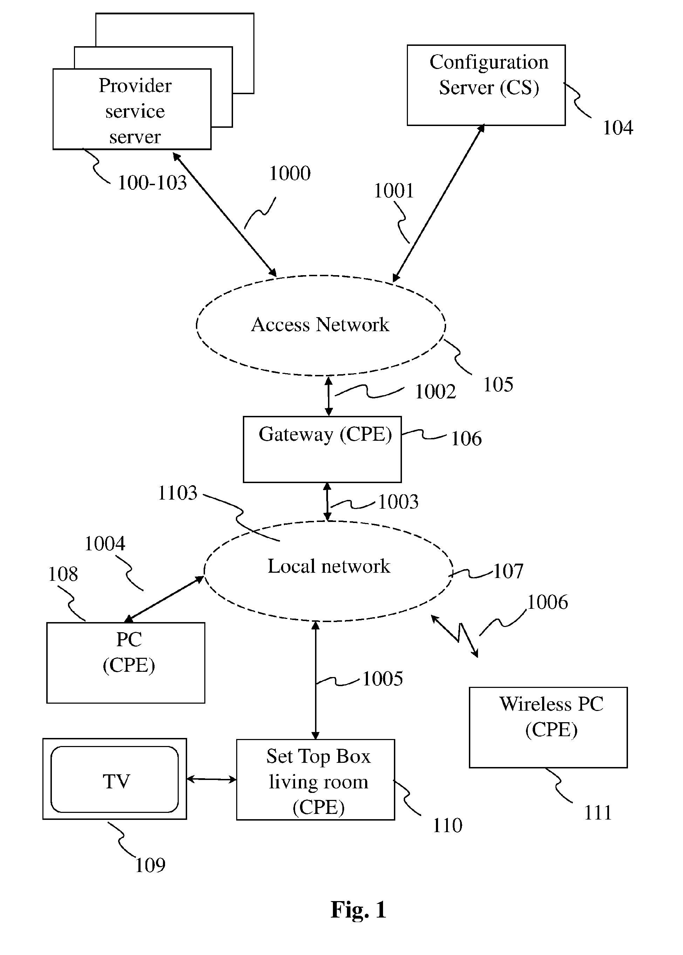

**Figure 1** shows an example network infrastructure in which the invention is implemented.

The network infrastructure comprises:
- a set of provider servers 100-103, for example a web server 100, a Video On Demand (VoD) server 101, a Broadband Broadcast Server 102 and a VolP server 103;
- a configuration server (CS) 104;
- a gateway (GW) device 106, a CPE ;
- an access network 105, for example the Internet, or a dedicated network; the access network interconnects provider servers 100-103 (via connection 1000), configuration server 104 (via connection 1001) and gateway 106 (via connection 1002);
- a local network 107, interconnecting devices on the home network, and connecting them via the gateway 106 to the access network 105 (via connections 1004, 1005 and 1006 and to the other devices (100-103, 104) connected to the access network 105;
- a personal computer (PC) 108, a CPE;
- a television set 109;
- a Set Top Box (STB) 110, a CPE; and
- a wireless PC 111, a CPE.

Gateway 106 is a device that is provided by the operator to offer triple-play services to the subscriber. The gateway 106 allows the subscriber to:
- access a VoD television and IP broadcast service provided by the operator's broadband broadcast server 101 respectively 102 via IPTV Set Top Box 110 and TV set 109;
- access the Internet via PCs 108 and 111, service provided by web server 100; and
- access an IP telephony service on a wireless DECT telephone set (DECT = Digital Enhanced Cordless Telecommunications), device not shown), service provided by VoIP server 103.

When the provider wants to send a configuration or software update to one or more of the CPE devices (106, 108, 110, 111), it instructs the configuration server 104 which automatically updates or reconfigures the selected CPE device(s), without manual intervention (i.e. without the operator's technical services being required to intervene at the subscriber's premises). In particular, the configuration server 104 can modify the address of the configuration server (for example, if additional configuration servers are necessary due to an increased number of subscribers, or in case of redistribution of IP addresses). However, when one or more subscriber's CPE devices are disconnected from the network, or if they are powered down, the address update is not propagated to (all) of the subscriber's CPE devices. Then, some of them may no longer be reachable by the configuration server for new updates or reconfigurations, which may result in incorrect behavior of the concerned CPE devices. According to another scenario, a software update distributed to CPEs may result in a CPE operating system crash on reboot, in which case the concerned CPEs are definitely out of order and can no longer be reached by the configuration server, and the subscriber can no longer access to the subscribed services, including the telephone service. According to yet another scenario, the one or more CPE devices in the subscriber's home network become unreachable by the configuration server due to a wrong configuration sent out by the configuration server. According to yet another scenario, the TLS (Transport Layer Security) security certificate has come to expire and the CPE device no longer trusts the configuration server, and thus refuses to establish a management session. All of these scenarios and other not discussed scenarios make the CPE device unmanageable.

The invention therefore adds a lifeline allowing to restore a correct functioning of the CPE devices when a CPE device is otherwise unreachable for the download of new software or for reconfiguration actions.

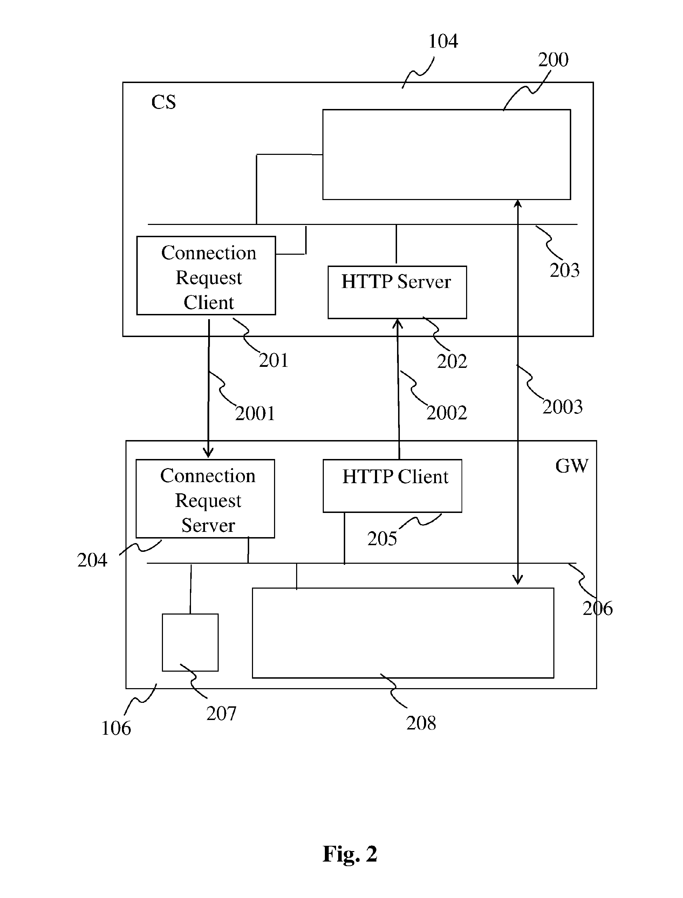

**Figure 2** shows additional modules 201, 202, 204, 205 and 207, that are added to devices 104 and 106 that implement the invention. On the server side, a connection request client 201 and a HTTP server 202 are added to the configuration server 104. On the CPE side, a connection request server 203 and a HTTP client 204 and a persistent storage space 207 are added to the CPE device 106 (gateway). The connection request client 201 in the CS 104 communicates with the connection request server in the CPE 106 over a connection 2001. The HTTP client 204 in the gateway 106 communicates with the HTTP server 202 in the CS 104 via a connection 2002. According to a particular embodiment, the HTTP server 202 and HTTP client 204 communicate according to the TR-069 protocol. Modules 200 and 205 are modules that are needed for the normal functioning of configuration server 104 respectively gateway 106, and that are also present in prior-art configuration servers and CPE devices. These modules communicate with each other via link 2003. Part of these may be a HTTP server in gateway 106, for reception of configuration commands from a HTT"P client in configuration server 104, a firewall in gateway 106, a NAT (Network Address Translation) module in gateway 107, and so on. According to a particular embodiment of the invention, the HTTP server and clients use the TR-069 protocol. The modules intercommunicate via internal communication means, such as an internal bus 203 for configuration server 104, respectively 206 for gateway 106. Communication between the configuration server 104 and gateway 106 takes place via the access network 105 of figure 1 (not shown here).

The links 2001 constitutes a life-line to the gateway 106 that allows to restore communication link 2002 when it is lost due to any of the communication failure scenarios for example that were previously described for figure 1.

The role of the Connection Request Server (CRS) 204 of the gateway 106 is to act as a server and listen for incoming connection requests, i.e. HTTP GET requests, on a default port, for example TCP port 7547. This port is hereafter referred to as 'lifeline port'. The CRS further authenticates entities that issue a request with a set of CPE configured credentials, for example factory default username and password. According to an implementation variant, the CPE is provided with optional mechanisms such as those which allow to protect against malicious use. An example protection mechanism is connection request throttling allowing to limit the number of accepted requests over time, in order to protect the CPE against denial of service attacks, where the CPE would become unavailable when it is servicing many requests simultaneously.

The role of the HTTP client 205 of GW 106 is to act as an HTTP client that establishes connections with the configuration server 104, possibly after having resolved the configuration server's URL (Unified Resource Locator) via DNS (Domain Name System) queries to one or more DNS servers (not shown) in order to obtain the IP address of the configuration server 104. A connection to the CS 104 is established on occurrence of a number of events, for example: whenever a connection request is received by the CRS 204 (the CRS informs the HTTP client of such an event); on startup of the GW 106, or when the GW's 106 configuration changes and the CS 104 subscribed to be notified of such a change. According to a variant embodiment, the list of events that trigger an establishment of a connection to the CS 104 comprises TR-069 Inform RPC (Remote Procedure Call) events. The HTTP client 205 of GW 106 further validates CS 104 certificate signature with any one of a number of locally stored certificates (for example locally stored in persistent storage 107) to trust the CS 104, and the HTTP client 205 applies commands received from the CS 104, which commands comprise for example 'SetParameterValues' to modify a specific configuration parameter of the GW, stored in persistent storage 207, or 'Reboot'.

The role of the persistent storage 207 of GW 106 is to:
● comprise the CS URL (example: http://cs.provider.com);
● comprise connection request credentials (username and password);
● comprise one or more locally stored certificates that can be re-used to validate the CS provider certificate signature;
● comprises the GW 106 manufacturer's public key, which is used to validate the authenticity of firmware images and other manufacturer provided data; and
● comprises the GW's 106 CPE device configuration.

The role of the Connection Request Client (CRC) 201 of the CS 104 is a HTTP client application that can initiate a connection request and authenticate to the GW 106 at a particular point of time and trigger a management session.

The role of the HTTP server 202 in CS 104 is among others to provide a HTTP server and to provide the CS certificate signature to the GW 106.

In the above example of figure 2, the gateway 106 is taken as an example CPE device. The invention is however not limited to implementation in a gateway, but can be implemented in any type of CPE. When the CPE device 106 is no longer capable of establishing a management session with the configuration server 104,

Now when the CRS 204 has lost connection with the CS 104, it listens on the lifeline port. The CPE's IP address is typically known by the service operator. The lifeline port number is a default port number as fixed for example by IANA (Internet Assigned Numbers Authority) for TR-069 (TCP port 7547), or is agreed between the service provider and the CPE device manufacturer. When the CPE (for example GW 106) receives an incoming HTTP GET connection request on the lifeline port, the CPE's CRS (for example CRS 204 of GW 106) verifies any lifeline "rescue" arguments that are provided in the request. Typical arguments are: Device entity, for example comprising Manufacturer ID, Product Class, Serial Number; this is to ensure that a configuration command or a software upgrade provided will only be taken into account by the CPE device for which it is destined; and one or more commands comprising: revert to factory defaults (to undo any user configuration or other configuration change that led to the loss of remote management connection with the CS); provide a new CS URL; set CS credentials (username, password); disable CS certificate checking so as to trust the CS anyway; or open any other management interfaces such as a User Interface, telnet session, so as to allow the service provider to connect and manage the device, e.g. for troubleshooting and correcting configuration problems. Optionally, to increase security and protect against malicious transmission of commands over the lifeline, the connection request can comprise a hash value calculated over the connection request's commands, signed with the CPE manufacturer's private key, so that the CPE device can check that the commands have not been altered by an unauthorized entity.

If the commands are correctly authenticated by the CPE, the CPE executes the commands or downloads the new software. If the device is correctly reconfigured, the remote management connection between the CS (e.g. device 104 of figs 1 and 2) and the CPE (e.g. one of the devices 106, 108, 110 or 111 of fig.1 or device 106 of fig 2) can be restored (e.g. over link 2003 of fig.2).

According to a variant embodiment, the CPE device confirms that the commands or the software update has been taken into account by sending a confirmation message to the CS indicating that the command has been taken into account. This variant has the advantage of signaling the exact moment to the configuration server when the CPE is ready to establish the remote management session.

According to a variant embodiment, the CS transmits, after having transmitted the reconfiguration commands, further command(s) to indicate to the CPE that it is to initiate a remote management session with the CS. Optionnally, such command(s) are transmitted only after having received the confirmation message.

According to yet another variant embodiment, the CPE, after having taken into account the commands or the software update, it verifies if it is able to contact the CS and reports this back over the lifeline.

The variant embodiments can be combined to form a particular advantageous embodiment.

According to a particular embodiment, the invention is entirely implemented in hardware, for example as a dedicated component (for example as an ASIC, FPGA or VLSI) (respectively « Application Specific Integrated Circuit », « Field-Programmable Gate Array » and « Very Large Scale Integration ») or as distinct electronic components integrated in a device or in a form of a mix of hardware and software.

## Claims

1. Method of communication between a remote configuration device (104) and a remote configurable device (106, 108, 110, 111) connected in a digital communication network (105), **characterized in that** said method is implemented by said remote configuration device (104), said method comprising the following steps:
if it is determined that said remote management connection is lost,
- transmission of a message comprising at least one command comprising configuration update and/or software update to an address and a lifeline port number of a remote configurable device (106, 108, 110, 111), said lifeline port number being a port number on which said remote configurable device (106, 108, 110, 111) listens for said message; and
- reception of a request for establishment of said remote management connection between said configuration device (104) and said remote configurable device (106, 108, 110, 111).

2. Method according to claim 1, **characterized in that** said reestablishment of said remote management connection is initiated upon a reception of a confirmation message from said remote configurable device, representative for an indication that said message has been taken into account by said remote configurable device.

3. Method according to claim 1 or 2, **characterized in that** said message comprises information representative of connection request credentials.

4. Method of communication between a remote configurable device (106, 108, 110, 111) and a configuration device (104) connected in a digital communication network (105), **characterized in that** said method is implemented by said remote configurable device (106, 108, 110, 111), said method comprising the following steps:
- listening for an incoming message on a lifeline port number, said lifeline port number being a port number on which said remote configurable device (106, 108, 110, 111) listens for incoming messages that comprise a configuration update and/or a software update for said remote configurable device (106, 108, 110, 111);
- applying said configuration update and/or said software update; and
- transmission of a request for establishment of a remote management connection to said remote configuration device (104).

5. Remote configurable device (106, 108, 110, 111), said remote configurable device (106, 108, 110, 111) being connected in a digital communication network (105), said remote configurable device (106, 108, 110, 111) being **characterized in that** it comprises the following means:
- a connection request server (204) for listening to incoming messages on a lifeline port number, said lifeline port number being a port number on which said remote configurable device (106, 108, 110, 111) listens for incoming messages that comprises a connection request, a configuration and/or software update for said remote configurable device (106, 108, 110, 111);
- a remote management client (205), for reception of messages related to remote configuration of said remote configurable device (106, 108, 110, 111) by said remote configuration management device (104).

6. Remote configuration management device (104), said remote configuration management device (104) being **characterized in that** comprises the following means:
- a connection request client (201) for sending of a message comprising at least one command comprising configuration update and/or software update to an address and a lifeline port number of a remote configurable device (106, 108, 110, 111), said lifeline port number being a port number on which said remote configurable device listens for said message;
- a remote management server (202), for transmission of messages related to remote configuration of said remote configurable device (106, 108, 110, 111) by said remote configuration management device (104).
